(19) Europäisches Patentamt
European Patent Office
Office européen des brevets

(11) EP 1 936 894 A1

(12) **EUROPEAN PATENT APPLICATION**

(43) Date of publication:
**25.06.2008 Bulletin 2008/26**

(51) Int Cl.:
***H04L 25/02*** $^{(2006.01)}$ ***H04L 27/26*** $^{(2006.01)}$

(21) Application number: **06126863.7**

(22) Date of filing: **21.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Fujitsu Ltd.**
**Kawasaki-shi, Kanagawa 211-8588 (JP)**

(72) Inventors:
- **Zhou, Yuefeng**
  **Haywards Heath, RH16 1UZ (GB)**
- **Hart, Michael John Beems**
  **London, W12 9LL (GB)**

(74) Representative: **Wilding, Frances Ward**
**Haseltine Lake**
**Lincoln House**
**300 High Holborn**
**London WC1V 7JH (GB)**

Remarks:
Amended claims in accordance with Rule 137(2) EPC.

# (54) Pilot block-based channel estimation in a OFDM system

(57) The block-based channel estimation is performed within a two-dimensional block of pilot subcarriers, covering a part only of the transmission band. Processing methods such as interpolation or averaging may be used. Preferably, said system is an OFDM or OFDMA system.

Figure 7

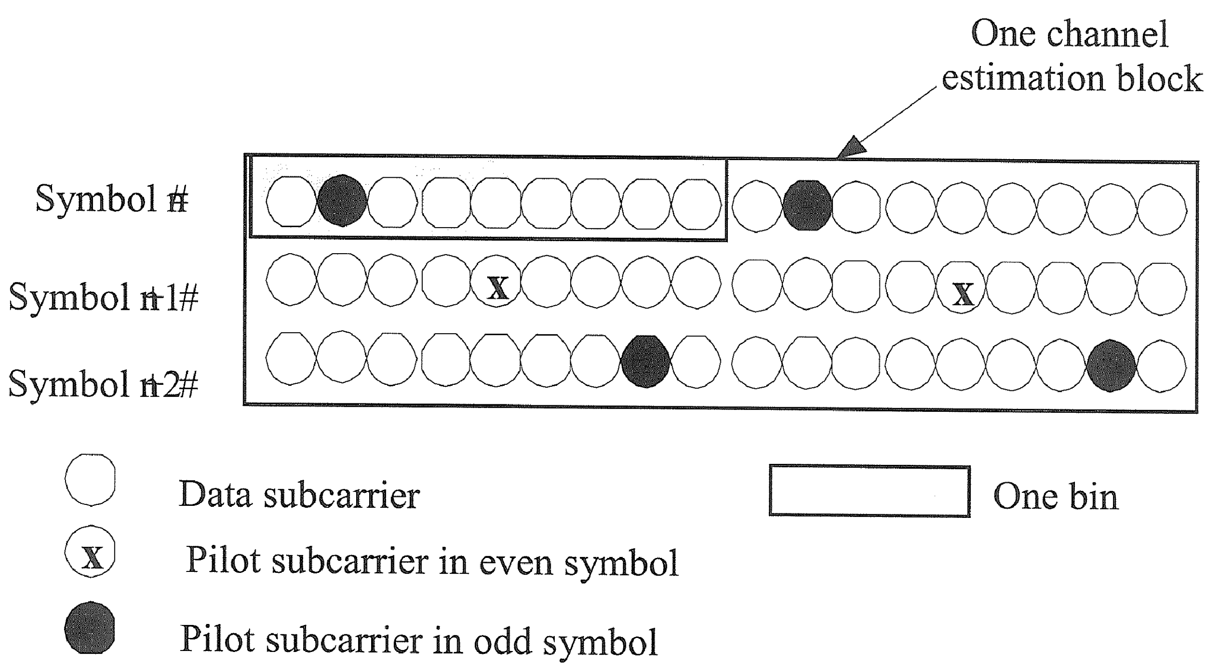


EP 1 936 894 A1

## Description

The present invention relates to channel estimation for a wireless communication system. Channel estimation is important in all wireless systems to determine the impact of the radio channel on a signal. Once the general characteristics of the channel between a transmitter and a receiver have been determined (channel estimation), the communication system can compensate for the impact of the channel to compensate for the radio channel effect. This procedure is known as channel equalization.

The channel response (or channel impulse response in the time domain) is usually determined using pilot signals, which are signals of predetermined characteristics; usually predetermined phase and/or amplitude. Channel estimation can be carried out in the time or frequency domain. In a digital system, channel estimation is usually performed in the frequency domain. For such systems, previous channel estimation methods have carried out channel estimation over the entire band used by the communication system as a single unit. Thus, for example in OFDM and OFDMA systems, the pilot signals are positioned to cover an entire symbol or more than one symbol. In this symbol-based channel estimation, averaging and filtering methods are used to extrapolate results from pilots over the whole symbol.

The OFDMA-based technology has been enthusiastically embraced as the leading technology for the upcoming 4G cellular infrastructure, being the access technique used in WiMAX systems based on the IEEE802.16 standard and is under consideration in many other standards, such as 3GPP LTE, 3GPP2 evolution, IEEE802.20, IEEE802.22 In an OFDMA-based system, such as WiMAX, the bandwidth resource is typically divided into a number of sub-channels (i.e. groups of logical subcarriers), with the subcarriers within each subchannel being allocated to different physical subscribers. Each subscriber can be treated separately independent of location, distance from the base station, interference and power controls.

Like in other wireless communication systems, accurate channel estimation is essential to coherently detect the received signal. If the channel estimation is aided by the transmitted pilots, in frequency domain, according to Nyquist sampling theorem, the required pilot spacing is:

$$\Delta f_{Pilot} \quad \frac{1}{2\tau_{max}} = \quad \Delta f \cdot N_L \quad = (N_L = 1, 2, 3 \cdots) \qquad (1)$$

where $N_L$ is the separation in number of subcarriers between two neighbouring pilot subcarriers, $\Delta f$ is the maximum subcarrier spacing in Hz in order to satisfy the Nyquist criterion, $\tau_{max}$ is maximum channel delay spread in seconds. The required pilot density (minimal overhead) is:

$$\frac{\Delta f}{\Delta f_{Pilot}} = \frac{1}{N_L} \qquad (2)$$

However, in OFDMA-based WiMAX, the pilots over one OFDM symbol may just be partially transmitted, thus the pilot density will be very low in some areas over frequency domain. Therefore the channel estimation within those areas cannot achieve sufficient accuracy. For example, Figure 1 shows the transmitted pilots for one segment when using downlink PUSC (Partial Utilization SubChannelization). It is clear that the pilot density will be very low in some areas, thus the channel estimation within those areas cannot achieve sufficient accuracy. On the other hand, data subcarriers will not be transmitted in these areas, therefore, estimating the channel response within those area will waste computation and energy resources. This problem will be further exacerbated in the case of DL PUSC with dedicated pilots, as now only pilots are transmitted over a major group, where a major group is a subset of a segment. Moreover, the performance of the channel estimation by linear interpolation at the data subcarriers located at the margin of used clusters would be seriously degraded (Fig. 2).

In uplink, different connections may experience various radio channels, and have different profiles for their bursts (Fig. 3). In symbol-based channel estimation, the difference of the pilot power, and radio channels among different subscribers should be compensated, which needs extra computation.

It is desirable to overcome or at least mitigate disadvantages in the prior art channel estimation methods.

The invention is defined in the independent claims, to which reference should now be made. Advantageous embodiments are set out in the sub claims.

According to one preferred embodiment there is provided a channel estimation method for use in a wireless communication system, the system comprising a source apparatus and a destination apparatus, the source apparatus being operable to transmit information to the destination apparatus, the method comprising: allocating transmission frequency bandwidth over a particular time period into a plurality of contemporaneous pilot transmission blocks each having a frequency bandwidth profile; assigning pilot signals for transmission at selected time-frequency positions within each of the pilot transmission blocks; and in the particular time period, transmitting information and the pilot signals of at least one of said pilot transmission blocks from the source apparatus to the destination apparatus.

This method allows channel estimation using pilot transmission blocks transmitted at the same time (in parallel), each block covering a part only of the transmission band. Such a block-based channel estimation has a number of advantages over the prior art symbol-based channel estimation.

The block-based channel estimation according to invention embodiments is performed within a small two-dimensional block of subcarriers. Since the dimension of the channel estimation block in the frequency domain can be very short, this method can decrease the computation complexity. This is advantageous for FPGA/ASIC implementation.

If the clock is fast enough in FPGA/ASIC, one small block-based channel estimation/equalization module can be re-used for the whole permutation zone channel estimation, for example in time-division-duplex style, thus requiring fewer hardware multipliers.

Division into smaller blocks also avoids the degradation resulting from the side effect (Fig. 2) of the partial, insufficient pilot density in some parts of the frequency band (for example, where pilots have been allocated, but are not sent, because there is no transmission in that part of the band).

The redundant channel estimation for areas with no pilot transmission is avoided, which saves computation and energy resources.

The need for compensation of the difference of pilot power and radio channels between different subscribers' services/connections is obviated, because the pilot power can be calculated separately for each block.

Preferably, the wireless communication system supports a plurality of different schemes for mapping information to be transmitted to the transmission frequency bandwidth, the method including, before allocating transmission frequency bandwidth, determining the frequency bandwidth profile and time period of the pilot transmission blocks and the pilot signal positions according to the scheme in operation at the time of transmission.

For example, in a scheme such as OFDMA or OFDM with different permutation zones, a different scheme can be used for each permutation zone. This allows the pilot transmission to be inherently suitable for the permutation zone in question.

In a preferred embodiment, the wireless communication system has a minimum allocation unit for allocating time and transmission frequency bandwidth to a user, and the minimum allocation unit has a transmission frequency bandwidth equal to or greater than the maximum frequency bandwidth profile of a pilot transmission block.

Many wireless systems include a minimum allocation unit (in OFDMA this is known as a "slot"). It is therefore suitable if the frequency bandwidth of a pilot transmission block is smaller than or equal to that of a minimum allocation unit so that it can fit within the minimum allocation unit. More preferably, the pilot transmission block has the same frequency dimension or a plurality of the pilot transmission blocks together have the same frequency dimension as a minimum allocation unit. In such a preferred embodiment, the minimum allocation unit is divided evenly into pilot transmission blocks with the entire bandwidth of the unit being so divided.

It is possible to allocate the entire band into pilot transmission blocks. However, with use of pilot transmission blocks rather than pilot transmission over the entire band, there is no requirement to allocate pilot transmission blocks in an area of the band where no transmission in contemplated. Preferably, therefore allocating transmission frequency bandwidth into the plurality of pilot transmission blocks includes allocating only the transmission frequency bandwidth which is to be used for information transmission in the particular time period.

Pilot transmission blocks may cover part or all of the transmission frequency bandwidth which is to be used for information transmission. Preferably, allocating transmission frequency bandwidth into the plurality of pilot transmission blocks includes allocating all of the transmission frequency bandwidth which is to be used for information transmission in the particular time period.

The blocks may have different dimensions in the time and/or frequency directions if appropriate, but calculation is simplified if they are identical. Thus, advantageously the blocks each have the same time duration and a constant transmission frequency bandwidth profile extending over an equal portion of the transmission frequency bandwidth. The potentially each also have the same start time.

Pilot transmission blocks can be structured differently so that their internal structure (in terms of where pilot signals are allocated) is independent of other pilot blocks for flexibility. Alternatively, for simplicity, the pilot signals may be positioned so that the position of each pilot signal within each transmission block is the same, or at least the positioning is the same for at least two such blocks. Preferably, the pilot signals within each pilot transmission block have the same positioning relative to each other and to the start time and portion of transmission frequency bandwidth.

The pilot signal position in the blocks can be determined by the system or by the previous estimation as to the channel characteristics and/or mobility between the source and destination apparatus.

The pilot signals within each block may have a scattered pattern (for example so that only one pilot is present at a given frequency in that block) or a regular pattern (in which, for example, more than one pilot may be present at a given frequency).

In a low-mobility environment for example, it can be advantageous to position the pilot signals regularly (non-scattered) within each transmission block, for example at the edges of the block and subsequently average the pilots in the time domain to average the noise effect. Alternatively, scattered pilots could be used, so that pilots in adjacent symbols can be combined and thus increase the pilot density.

Where a change in channel characteristics is expected over time and/or the frequency domain (for example with high mobility) the pilot signals could also be scattered within a pilot transmission block and combined. Here a 1D or 2D filtering method can be advantageously used to estimate the channel parameters.

Advantageously, each pilot signal received gives an indication of channel response at the transmitted time and frequency.

The channel responses for the pilots in a single transmission block may be processed to provide an estimate of the channel response over the whole pilot transmission block. As exemplified above, this processing may involve any combination of combining, averaging, filtering and interpolation depending on the current conditions and/or the permutation zone. Current conditions can derived from a combination of SNR, SINR, mobility, carrier frequency, channel characteristics (i.e. frequency domain correlation bandwidth or time domain correlation time which are measures of across how much bandwidth or time the channel can characteristics can be assumed to be similar and are sometimes referred to as coherence bandwidth and coherence time respectively).

The channel estimation method could also comprise determining which processing mode to select, even prior to transmission. The determination may be based on certain parameters, such as transmission block structure and/or channel conditions. Broadly speaking, the mode selected and the arrangement of pilot signals within each pilot transmission block can be selected to correspond to each other or separately.

In certain conditions, for example in a low-mobility environment, the channel response of a pilot signal in a single pilot transmission block at a given time-frequency position may be interpolated to apply at that frequency for the whole time period of said pilot transmission block.

Alternatively, the channel responses of two or more pilot signals transmitted at different times and the same frequency in a single pilot transmission block are averaged and the average value may be assumed to apply at both times.

As a further alternative, the channel response to either side of pilot signals in the time direction in said single pilot transmission block may be estimated by interpolation between two or more of the averaged values.

As to the frequency direction, processing methods such as interpolation or averaging may be used. For example, the channel response to either side of pilot signals in the frequency direction in a single pilot transmission block may be estimated by interpolation.

If average values have been provided by time-domain averaging, then the channel response to either side of pilot signals in the time direction in said single pilot transmission block may be estimated by interpolation between two or more of the averaged values.

In such a case, the averaged and interpolated channel response may be interpolated in the frequency direction.

One of the advantages of the block-based channel estimation method is that the channel estimation can be carried out by a single or a few modules that can then be re-used for all similar blocks. Preferably therefore, two or more of the contemporaneous pilot transmission blocks are processed consecutively by a single processing module.

The channel estimation method can be implemented in any suitable digital mobile communication system. These include WiMAX, WiFi (IEEE 802.11), DAB, DVB and many other widely-used communication systems. Preferably, said system is an OFDM or OFDMA system and the different schemes for mapping information to be transmitted to the transmission frequency bandwidth in an OFDM or OFDMA system use different permutation formulae.

Preferably, said system is an OFDM or OFDMA system, and each slot of an OFDM or OFDMA time-division-duplex frame may include a single pilot transmission block or be divided equally in the frequency direction into pilot transmission blocks.

Alternatively, said system is an OFDM or OFDMA system, and two adjacent slots in a OFDMA time-division-duplex frame may include a single pilot transmission block or be divided equally in the frequency direction into pilot transmission blocks.

The correspondence between slots and pilot transmission blocks is dependent on the permutation zone in question.

In many cases, the pilot transmission block is defined in the time direction by two or more adjacent symbols. This can allow a spread of pilot subcarriers over the available frequency bandwidth with sufficient pilot density and without placing too many pilots in a single symbol. A high pilot overhead in one symbol can lead to an uneven signal over time because pilots are often boosted. This may cause difficulties with techniques such as QAM and other amplitude modulation techniques.

In all of these OFDM and OFDMA systems, a pilot transmission block is preferably defined in both the frequency and time directions.

The source apparatus may be any type of apparatus in a communication system, such as a base station, relay station or user terminal. Equally, the destination apparatus may be any apparatus in the communication system.

In a further embodiment, the invention provides a channel estimation method in a source apparatus of a wireless communication system, the system comprising the source apparatus and a destination apparatus, the source apparatus being operable to transmit information to the destination apparatus, the method comprising: allocating transmission frequency bandwidth over a particular time period into a plurality of contemporaneous pilot transmission blocks each having a frequency bandwidth profile; assigning pilot signals for transmission at selected time-frequency positions within each of the pilot transmission blocks; and in the particular time period, transmitting information and the pilot signals of at least one of said pilot transmission blocks from the source apparatus to the destination apparatus.

In an equivalent method in a destination apparatus, embodiments of the present invention provide a channel estimation method for use in a destination apparatus of a wireless communication system, the system comprising: the destination apparatus; a source apparatus operable to transmit information to the destination apparatus; allocation means operable to allocate transmission frequency bandwidth over a particular time period into a plurality of contemporaneous pilot transmission blocks each having a frequency bandwidth profile; and assignment means operable to assign pilot signals for transmission at selected time-frequency positions within each of the pilot transmission blocks, the method comprising: in the particular time period, receiving information and the pilot signals of at least one of said pilot transmission blocks from the source apparatus; using each pilot signal received to give an indication of channel response at the transmitted time and frequency; and processing the channel responses for the pilots in the at least one pilot transmission block to provide an estimate of the channel response over said pilot transmission block.

According to a preferred system embodiment, there is provided a wireless communication system, the system comprising: a source apparatus and a destination apparatus, the source apparatus being operable to transmit information to the destination apparatus; allocation means operable to allocate transmission frequency bandwidth over a particular time period into a plurality of contemporaneous pilot transmission blocks each having a frequency bandwidth profile; assignment means operable to assign pilot signals for transmission at selected time-frequency positions within each of the pilot transmission blocks; and transmission means operable, in the particular time period, to transmit information and the pilot signals of at least one of said pilot transmission blocks from the source apparatus to the destination apparatus.

According to a preferred source apparatus embodiment, there is provided a source apparatus of a wireless communication system, the system comprising the source apparatus and a destination apparatus, the source apparatus being operable to transmit information to the destination apparatus and comprising: allocation means operable to allocate transmission frequency bandwidth over a particular time period into a plurality of contemporaneous pilot transmission blocks each having a frequency bandwidth profile; assignment means operable to assign pilot signals for transmission at selected time-frequency positions within each of the pilot transmission blocks; and transmission means operable, in the particular time period, to transmit information and the pilot signals of at least one of said pilot transmission blocks from the source apparatus to the destination apparatus.

According to a preferred destination apparatus embodiment, there is provided a destination apparatus of a wireless communication system, the system comprising: the destination apparatus; a source apparatus operable to transmit information to the destination apparatus; allocation means operable to allocate transmission frequency bandwidth over a particular time period into a plurality of contemporaneous pilot transmission blocks each having a frequency bandwidth profile; and assignment means operable to assign pilot signals for transmission at selected time-frequency positions within each of the pilot transmission blocks, the destination apparatus comprising: reception means operable, in the particular time period, to receive information and the pilot signals of at least one of said pilot transmission blocks from the source apparatus; indication means operable to use each pilot signal received to give an indication of channel response at the transmitted time and frequency; and processing means operable to process the channel responses for the pilots in the at least one pilot transmission block to provide an estimate of the channel response over said pilot transmission block.

According to a further computer program embodiment there is provided a suite of computer programs which, when executed on computing devices of a wireless communication system, causes the system to carry out a channel estimation method, the system comprising a source apparatus and a destination apparatus, the source apparatus being operable to transmit information to the destination apparatus, the method comprising: allocating transmission frequency bandwidth over a particular time period into a plurality of contemporaneous pilot transmission blocks each having a frequency bandwidth profile; assigning pilot signals for transmission at selected time-frequency positions within each of the pilot transmission blocks; and in the particular time period, transmitting information and the pilot signals of at least one of said pilot transmission blocks from the source apparatus to the destination apparatus.

Individual computer programs may also be provided for the source and destination apparatus. Accordingly, in one preferred embodiment there is provided a computer program which, when executed on a computing device of a source apparatus of a wireless communication system, causes the source apparatus to carry out a channel estimation method, the system comprising the source apparatus and a destination apparatus, the source apparatus being operable to transmit information to the destination apparatus, the method comprising: allocating transmission frequency bandwidth over a particular time period into a plurality of contemporaneous pilot transmission blocks each having a frequency bandwidth profile; assigning pilot signals for transmission at selected time-frequency positions within each of the pilot transmission blocks; and in the particular time period, transmitting information and the pilot signals of at least one of said pilot transmission blocks from the source apparatus to the destination apparatus.

According to a final preferred embodiment there is provided a computer program which, when executed on a computing device of a destination apparatus of a wireless communication system, causes the destination apparatus to carry out a channel estimation method, the system comprising: the destination apparatus; a source apparatus operable to transmit information to the destination apparatus; allocation means operable to allocate transmission frequency bandwidth over a particular time period into a plurality of contemporaneous pilot transmission blocks each having a frequency bandwidth profile; and assignment means operable to assign pilot signals for transmission at selected time-frequency positions within each of the pilot transmission blocks, the method comprising: in the particular time period, receiving information and the pilot signals of at least one of said pilot transmission blocks from the source apparatus; using each pilot signal received to give an indication of channel response at the transmitted time and frequency; and processing the channel responses for the pilots in the at least one pilot transmission block to provide an estimate of the channel response over said pilot transmission block.

Apparatus means and suitable steps may be provided in the apparatus and computer program embodiments respectively corresponding to the preferred features of the method.

Preferred features of the present invention will now be described, purely by way of example, with reference to the accompanying drawings, in which:-

Figure 1 (prior art) shows the pilots transmitted in the downlink PUSC, when one subchannel is allocated in the segment (FFT size = 512);

Figure 2 (prior art) shows an example whereby due to insufficient pilot density between clusters A and B, the subcarriers in the right edge of clusters A will face inaccurate channel estimation problem when using linear interpolation;

Figure 3 (prior art) shows an example of WiMAX TDD uplink sub frame structure. Different bursts over one whole UL symbol have various burst profile and experience different radio channels. Moreover, when the size of FFT is large, symbol-based channel estimation needs large memory, which will increase the cost of chipset or physical layer technology used to implement the receiver;

Figure 4a shows an example of a correct channel estimation block definition where one slot is divided into 4 channel estimation blocks;

Figure 4b shows an example of a wrong channel estimation block where a channel estimation block has non-allocated subcarriers;

Figure 4c shows an example of a wrong channel estimation block definition where a channel estimation block crosses multiple slots;

Figure 4d shows an example of a wrong channel estimation block definition;

Figure 4e shows an example of a wrong channel estimation block definition; in a specific permutation zone each channel estimation block should have the same dimension;

Figure 5 shows a preferred channel estimation block definition in DL PUSC;

Figure 6 shows the structure of a preferred channel estimation block in UL PUSC;

Figure 7 shows the structure of one preferred channel estimation block (AMC 2x3);

Figure 8 shows an example of a scattered channel estimation block;

Figure 9 shows how the pilots in adjacent symbols can be combined to increase the pilot density;

Figure 10 shows an example of a non-scattered channel estimation block; and

Figure 11 shows how in a low mobility and low SNR environment, for a non-scattered channel estimation block, it is better to perform time domain averaging at first to average the noise effect.

Details of the Block-Based Channel Estimation Scheme according to Preferred Embodiments

There are two logical steps in a scheme according to a preferred embodiment using OFDMA. The reader is referred to IEEE 802.16-2005 for an implementation of OFDMA. This standard is incorporated herein by reference. The first step is dividing each permutation zone into channel estimation blocks in terms of the suchannelization/zone type in DUUL sub-frame. The second step is implementing different filtering methods on each channel estimation block to estimate the channel parameters.

Step 1: Dividing each permutation zone into channel estimation blocks

The two dimensional channel estimation block is defined by a basic 2xD (time x frequency) unit within a used slot in each permutation zone.

Rules in this embodiment defining the dimension of channel estimation blocks are:

1. The dimensions of the channel estimation block depends on the type of permutation. Therefore, different permutation zones have different definitions of channel estimation blocks;
2. Only one type exists in a specific permutation zone. Here the "type" means same size, same number of pilots, and same locations of pilots within one channel estimation block;
3. The defined channel estimation block should be a basic unit within one slot except in DL FUSC zone. In other words, one slot comprises a multiple number of channel estimation blocks;
4. The number of the channel estimation blocks depends on the number of used slots in one permutation zone except in DL FUSC zone. For example, if one slot comprises N channel estimation blocks, and there are M slots used in a permutation zone, then $M \times N$ channel estimation blocks fit totally in this permutation zone;
5. A channel estimation block shall not include non-allocated subcarriers;
6. In DL FUSC zone, the channel estimation block is defined by two adjacent symbols due to the fact that whilst the slot duration is only one symbol, the location of the variable pilots is different for odd and even symbols.

Fig. 4.a-e illustrates some correct and wrong examples of channel estimation block definitions for OFDMA systems.

If we take OFDMA-based WiMAX as an example, the following definitions can be used for different DL/UL permutation zones.

In DL PUSC permutation zone, one channel estimation block comprises two used clusters (in current segment) by two neighbouring symbols (Fig. 5).

In UL PUSC permutation zone, the channel estimation block is defined by one used tile, which consists of four successive active subcarriers in frequency domain by three symbols in the time domain, as shown in Fig. 6.

In AMC permutation zone, the channel estimation block is defined by one AMC slot. Figure 7 shows the structure of a channel estimation block when the slot configuration is 2x3.

In DL FUSC zone, the channel estimation block is defined by two adjacent symbols.

Step 2: Estimating the channel parameters within each channel estimation block.

The channel estimation/equalization should be done within each defined channel estimation block. Many 1xD, two 1xD, or 2xD filtering/averaging methods, such as averaging, linear interpolation, MMSE, LMS, and RLS, can be used to estimate the channel parameters.

In terms of the pilot allocation pattern, we classify the channel estimation block into two categories, scattered channel estimation block, and non-scattered regular channel estimation block. The selection of filtering methods should be based on the type of channel estimation block and the radio channel environment.

Fig. 8 shows an example of a scattered channel estimation block. In a low-mobility environment, if the channel coherent time is much longer than a few symbol durations, the pilots in adjacent symbols can be combined to increase the pilot density. For example, in AMC, if using 1xD filtering method, the pilots in adjacent symbols can be combined to increase the pilot density, as shown in Fig. 9. In a high-mobility environment, 2xD or two 1xD filtering methods can be used to estimate the channel parameters.

In a low mobility and low SNR environment, for a non-scattered channel estimation block, it is better to perform time domain averaging at first, as the channel will be highly correlated over the symbols, and then do frequency interpolation, to average the noise effect and thus improve performance. Comparing with two 1xD or 2xD interpolation methods, this method can decrease the computation resources. This method can be shown as Fig. 11.

In a high-mobility environment, especially when using a high order modulation scheme, such as 64QAM, it is better to perform 2xD or two 1xD filtering to obtain the channel parameters. This is because the channel correlation between pilot subcarriers will reduce as velocity increases, hence interpolation will yield better performance than averaging, especially for the case of a high SNR environment.

For example, in WiMAX UL PUSC, averaging in the time dimension can be performed before applying frequency domain filtering/averaging to average the noise effect and decrease the computation cost in low mobility and low SNR environment. Alternatively, two 1xD, or 2xD filtering/averaging methods can directly applied on one channel estimation block.

Thus, it can be envisaged that to ensure optimal performance in a wide variety of scenarios where pilots could be scattered or non-scattered, that a mobility enabled receiver would switch the channel estimation mode to ensure optimal performance. In the low-mobility scenario, it would be preferential to select averaging in the time domain for non-scattered pilots or combining for scattered pilots. The benefits are lower complexity compared to the alternative techniques, and if averaging is used, improved performance due to noise averaging. Whereas, in a high-mobility environment, it would be preferential to select two 1xD or 2xD filtering methods due to the fact that the adjacent pilot subcarriers in both time and frequency domain will experience some degree of uncorrelated fading. The system, perhaps in a suitable receiver (destination apparatus) would preferably incorporate a determining means, to decide which mode to select, for example based on observation of the current conditions and knowledge of the performance of the two alternative techniques in the observed conditions.

No channel estimation blocks will be allocated within the frequency area where the subchannels are not allocated for transmission, therefore, no channel estimation will be performed over these areas, thus saving computation resources and energy.

One channel estimation computation unit can be re-used in time-division-multiplex style within a loop to fulfil the channel estimation for the whole permutation zone, thus saving hardware resource in a chip design or whatever physical layer resource is used to implement the estimator. This is especially advantageous in the case of large FFT sizes.

## Summary

In summary, preferred embodiments of the invention provide a method of block-based channel estimation in OFDMA-based MIMO or SISO communication systems. The method comprises dividing each OFDMA subcarrier permutation zone into said channel estimation blocks, and implementing filtering/averaging methods on each defined block to estimate the channel parameters.

The step of dividing each OFDMA subcarrier permutation zone into said channel estimation blocks may comprise classifying the type of permutation zones to decide the dimension of said channel estimation block.

Dividing each OFDMA subcarrier permutation zone into said channel estimation blocks can implement the regulations to decide the dimension of said channel estimation block. Preferably, dividing each WiMAX permutation zone into said channel estimation includes defining the dimension of said channel estimation blocks in other types of subcarrier permutation zone, such as TUSC1, TUSC2, PUSC-ASCA and other zone types, by using the regulations.

Preferably, dividing each OFDMA subcarrier permutation zone into said channel estimation blocks means that no channel estimation blocks are located within those subchannels, which are not allocated for data transmission.

Advantageously, the step of dividing each WiMAX subcarrier permutation zone into said channel estimation blocks comprises the definition of the said channel estimation block into DL/UL PUSC, AMC zones.

Implementing filtering/averaging methods on each defined block to estimate the channel parameters advantageously comprises re-using one small block channel estimation in time-division-multiplex style to estimate and equalize the channel response for whole subcarrier permutation zone.

The step of implementing filtering/averaging methods on each defined block to estimate the channel parameters may mean that no block-based channel estimation is performed within those subchannels which are not allocated for data transmission, thus saving computation resources and energy.

Deciding whether to use averaging, interpolation or combining in the time domain may depend on both the subcarrier permutation type (i.e. contains scattered or non-scattered pilots) and the velocity of the receiving and/or transmitting station.

A suitable method may perform time domain averaging at first, and then do interpolation for non-scattered channel estimation block in low mobility and low SNR environment, thus averaging noise effect.

2xD or two 1xD filtering may be used to obtain the channel parameters for non-scattered channel estimation block in a high-mobility environment, thus taking the short channel coherent time effect into consideration.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality of a transmitter embodying the present invention. The invention may also be embodied as one or more device or apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form.

## Claims

1. A channel estimation method for use in a wireless communication system, the system comprising a source apparatus and a destination apparatus, the source apparatus being operable to transmit information to the destination apparatus, the method comprising:

    allocating transmission frequency bandwidth over a particular time period into a plurality of contemporaneous pilot transmission blocks each having a frequency bandwidth profile;
    assigning pilot signals for transmission at selected time-frequency positions within each of the pilot transmission blocks; and
    in the particular time period, transmitting information and the pilot signals of at least one of said pilot transmission blocks from the source apparatus to the destination apparatus.

2. The channel estimation method according to claim 1, wherein the wireless communication system supports a plurality of different schemes for mapping information to be transmitted to the transmission frequency bandwidth, the method including, before allocating transmission frequency bandwidth, determining the frequency bandwidth profile and time period of the pilot transmission blocks and the pilot signal positions according to the scheme in operation at the time of transmission.

3. The channel estimation method according to claim 1 or 2, wherein the wireless communication system has a minimum allocation unit for allocating time and transmission frequency bandwidth to a user, and the minimum allocation unit has a transmission frequency bandwidth equal to or greater than the maximum frequency bandwidth profile of a pilot transmission block.

4. The channel estimation method according to any of the preceding claims, wherein allocating transmission frequency bandwidth into the plurality of pilot transmission blocks includes allocating only the transmission frequency bandwidth which is to be used for information transmission in the particular time period.

5. The channel estimation method according to any of the preceding claims, wherein allocating transmission frequency bandwidth into the plurality of pilot transmission blocks includes allocating all of the transmission frequency bandwidth which is to be used for information transmission in the particular time period.

6. The channel estimation method according to any of the preceding claims, wherein the blocks each have the same time duration and a constant transmission frequency bandwidth profile extending over an equal portion of the transmission frequency bandwidth.

7. The channel estimation method according to claim 6, wherein the pilot signals within each pilot transmission block have the same positioning relative to each other and to the start time and portion of transmission frequency bandwidth.

8. The channel estimation method according to claim 7, wherein the pilot signals within each pilot transmission block are positioned regularly within the block.

9. The channel estimation method according to claim 7, wherein the pilot signals within each pilot transmission block are scattered over the block.

10. The channel estimation method according to any of the preceding claims, wherein each pilot signal received gives an indication of channel response at the transmitted time and frequency.

11. The channel estimation method according to claim 10, wherein the channel responses for the pilots in a single pilot transmission block are processed to provide an estimate of the channel response over the whole pilot transmission block.

12. The channel estimation method according to claim 11, wherein the processing is carried out in different modes each including averaging and/or filtering and/or interpolation and the mode used depends on current conditions such as SNR, SNIR, mobility and/or radio channel characteristics and/or a scheme used for mapping information to be transmitted to the transmission frequency bandwidth.

**13.** The channel estimation method according to claim 11 or 12, wherein the channel response of a pilot signal in a single pilot transmission block at a given time-frequency position is interpolated to apply at that frequency for the whole time period of said pilot transmission block.

**14.** The channel estimation method according to any of claims 11 to 13, wherein the channel response to either side of pilot signals in the frequency direction in a single pilot transmission block is estimated by interpolation.

**15.** The channel estimation method according to claim 11 or 12, wherein the channel responses of two or more pilot signals transmitted at different times and the same frequency in a single pilot transmission block are averaged and the average value is assumed to apply at both times.

**16.** The channel estimation method according to claim 15, wherein the channel response to either side of pilot signals in the time direction in said single pilot transmission block is estimated by interpolation between two or more of the averaged values.

**17.** The channel estimation method according to claim 16, wherein the averaged and interpolated channel response is interpolated in the frequency direction.

**18.** The channel estimation method according to any of claims 11 to 17, wherein two or more of the contemporaneous pilot transmission blocks are processed consecutively by a single processing module.

**19.** The channel estimation method according to claim 2 or any claim dependent thereon, wherein said system is an OFDM or OFDMA system and said schemes use different permutation formulae.

**20.** The channel estimation method according to any preceding claim, wherein said system is an OFDM or OFDMA system, and wherein each slot of an OFDM or OFDMA time-division-duplex frame includes a single pilot transmission block or is divided equally in the frequency direction into pilot transmission blocks.

**21.** The channel estimation method according to any of claims 1 to 19, wherein said system is an OFDM or OFDMA system, and wherein two adjacent slots in a OFDMA time-division-duplex frame include a single pilot transmission block or are divided equally in the frequency direction into pilot transmission blocks.

**22.** The channel estimation method according to any preceding claim, wherein said system is an OFDM or OFDMA system, and wherein a pilot transmission block is defined in the time direction by two or more adjacent symbols.

**23.** The channel estimation method according any preceding claim, wherein said system is an OFDM or OFDMA system, and wherein a pilot transmission block is defined in both the frequency and time directions.

**24.** The channel estimation method according to any preceding claim, wherein the source apparatus is a base station or relay station or user terminal.

**25.** The channel estimation method according to any preceding claim, wherein the destination apparatus is a base station or relay station or user terminal.

**26.** A channel estimation method in a source apparatus of a wireless communication system, the system comprising the source apparatus and a destination apparatus, the source apparatus being operable to transmit information to the destination apparatus, the method comprising:

allocating transmission frequency bandwidth over a particular time period into a plurality of contemporaneous pilot transmission blocks each having a frequency bandwidth profile;
assigning pilot signals for transmission at selected time-frequency positions within each of the pilot transmission blocks; and
in the particular time period, transmitting information and the pilot signals of at least one of said pilot transmission blocks from the source apparatus to the destination apparatus.

**27.** A channel estimation method for use in a destination apparatus of a wireless communication system, the system comprising: the destination apparatus; a source apparatus operable to transmit information to the destination apparatus; allocation means operable to allocate transmission frequency bandwidth over a particular time period into a plurality of contemporaneous pilot transmission blocks each having a frequency bandwidth profile; and assignment means operable to assign pilot signals for transmission at selected time-frequency positions within each of the pilot transmission blocks, the method comprising:

in the particular time period, receiving information and the pilot signals of at least one of said pilot transmission blocks from the source apparatus;
using each pilot signal received to give an indication of channel response at the transmitted time and frequency; and
processing the channel responses for the pilots in the at least one pilot transmission block to provide an estimate of the channel response over said pilot transmission block.

**28.** A wireless communication system, the system comprising:

a source apparatus and a destination apparatus, the source apparatus being operable to transmit information to the destination apparatus;
allocation means operable to allocate transmission frequency bandwidth over a particular time period into a plurality of contemporaneous pilot transmission blocks each having a frequency bandwidth profile;
assignment means operable to assign pilot signals for transmission at selected time-frequency positions within each of the pilot transmission blocks; and
transmission means operable, in the particular time period, to transmit information and the pilot signals of at least one of said pilot transmission blocks from the source apparatus to the destination apparatus.

**29.** A source apparatus of a wireless communication system, the system comprising the source apparatus and a destination apparatus, the source apparatus being operable to transmit information to the destination apparatus and comprising:

allocation means operable to allocate transmission frequency bandwidth over a particular time period into a plurality of contemporaneous pilot transmission blocks each having a frequency bandwidth profile;
assignment means operable to assign pilot signals for transmission at selected time-frequency positions within each of the pilot transmission blocks; and
transmission means operable, in the particular time period, to transmit information and the pilot signals of at least one of said pilot transmission blocks from the source apparatus to the destination apparatus.

**30.** A destination apparatus of a wireless communication system, the system comprising: the destination apparatus; a source apparatus operable to transmit information to the destination apparatus; allocation means operable to allocate transmission frequency bandwidth over a particular time period into a plurality of contemporaneous pilot transmission blocks each having a frequency bandwidth profile; and assignment means operable to assign pilot signals for transmission at selected time-frequency positions within each of the pilot transmission blocks, the destination apparatus comprising:

reception means operable, in the particular time period, to receive information and the pilot signals of at least one of said pilot transmission blocks from the source apparatus;
indication means operable to use each pilot signal received to give an indication of channel response at the transmitted time and frequency; and
processing means operable to process the channel responses for the pilots in the at least one pilot transmission block to provide an estimate of the channel response over said pilot transmission block.

**31.** A suite of computer programs which, when executed on computing devices of a wireless communication system, causes the system to carry out a channel estimation method, the system comprising a source apparatus and a destination apparatus, the source apparatus being operable to transmit information to the destination apparatus, the method comprising:

allocating transmission frequency bandwidth over a particular time period into a plurality of contemporaneous pilot transmission blocks each having a frequency bandwidth profile;
assigning pilot signals for transmission at selected time-frequency positions within each of the pilot transmission blocks; and
in the particular time period, transmitting information and the pilot signals of at least one of said pilot transmission blocks from the source apparatus to the destination apparatus.

**32.** A computer program which, when executed on a computing device of a source apparatus of a wireless communication system, causes the source apparatus to carry out a channel estimation method, the system comprising the source apparatus and a destination apparatus, the source apparatus being operable to transmit information to the destination apparatus, the method comprising:

allocating transmission frequency bandwidth over a particular time period into a plurality of contemporaneous pilot transmission blocks each having a frequency bandwidth profile;
assigning pilot signals for transmission at selected time-frequency positions within each of the pilot transmission blocks; and
in the particular time period, transmitting information and the pilot signals of at least one of said pilot transmission blocks from the source apparatus to the destination apparatus.

**33.** A computer program which, when executed on a computing device of a destination apparatus of a wireless communication system, causes the destination apparatus to carry out a channel estimation method, the system comprising: the destination apparatus; a source apparatus operable to transmit information to the destination apparatus; allocation means operable to allocate transmission frequency bandwidth over a particular time period into a plurality of contemporaneous pilot transmission blocks each having a frequency bandwidth profile; and assignment means operable to assign pilot signals for transmission at selected time-frequency positions within each of the pilot transmission blocks, the method comprising:

in the particular time period, receiving information and the pilot signals of at least one of said pilot transmission blocks from the source apparatus;
using each pilot signal received to give an indication of channel response at the transmitted time and frequency; and
processing the channel responses for the pilots in the at least one pilot transmission block to provide an estimate of the channel response over said pilot transmission block.

**Amended claims in accordance with Rule 137(2) EPC.**

**1.** A transmission method used in channel estimation in a wireless communication system, the system comprising a source apparatus and a destination apparatus, the source apparatus being operable to transmit information to the destination apparatus, the method comprising:

allocating transmission frequency bandwidth over a particular time period into a plurality of contemporaneous pilot transmission units each defined by time and frequency bandwidth, wherein allocating transmission frequency bandwidth into the plurality of pilot transmission units includes allocating only the transmission frequency bandwidth which is to be used for information transmission in the particular time period;
assigning pilot signals for transmission at selected time-frequency positions within each of the pilot transmission units; and
in the particular time period, transmitting information and the pilot signals of at least one of said pilot transmission units from the source apparatus to the destination apparatus.

**2.** The transmission method according to claim 1, wherein the wireless communication system supports a plurality of different schemes for mapping information to be transmitted to the transmission frequency bandwidth, the method including, before allocating transmission frequency bandwidth, determining the frequency bandwidth and time period of the pilot transmission units and the pilot signal positions according to the scheme in operation at the time of transmission.

**3.** The transmission method according to claim 1 or 2, wherein the wireless communication system has a minimum allocation unit for allocating time and transmission frequency bandwidth to a user, and the minimum allocation unit has a transmission frequency bandwidth equal to or greater than the frequency bandwidth of a pilot transmission unit.

**4.** The transmission method according to any of the preceding claims, wherein allocating transmission frequency bandwidth into the plurality of pilot transmission units includes allocating all of the transmission frequency bandwidth which is to be used for information transmission in the particular time period.

**5.** The transmission method according to any of the preceding claims, wherein the pilot transmission units each have the same time duration and frequency bandwidth extending over an equal portion of the transmission frequency bandwidth.

**6.** The transmission method according to claim 5, wherein the pilot signals within each pilot transmission unit have the same positioning relative to each other and to the start time and portion of transmission frequency bandwidth.

**7.** The transmission method according to claim 6, wherein the pilot signals within each pilot transmission unit are positioned regularly within the unit.

**8.** The channel estimation method according to claim 7, wherein the pilot signals within each pilot transmission unit are scattered over the unit.

**9.** A transmission method according to any of the preceding claims, wherein the method is carried out in a source apparatus of the wireless communication system.

**10.** A channel estimation method for use in a wireless communication system, the system comprising: a destination apparatus; a source apparatus operable to transmit information to the destination apparatus; allocation means operable to allocate transmission frequency bandwidth over a particular time period into a plurality of contemporaneous pilot transmission units each defined by time and frequency bandwidth, wherein the allocation means is operable to allocate only the transmission frequency bandwidth which is to be used for information transmission in the particular time period; and assignment means operable to assign pilot signals for transmission at selected time-frequency positions within each of the pilot transmission units, the method comprising:

in the particular time period, receiving information and the pilot signals of at least one of said pilot transmission units from the source apparatus wherein every pilot transmission block received includes both information and pilot signals;
using each pilot signal received to give an indication of channel response at the transmitted time and frequency; and
processing the channel responses for the pilots in the at least one pilot transmission unit to provide an estimate of the channel response over said pilot transmission unit.

**11.** The channel estimation method according to claim 10, wherein the method is carried out in the destination apparatus.

**12.** The channel estimation method according to claim 10 or 11, wherein the processing is carried out in different modes each including averaging and/or filtering and/or interpolation and the mode used depends on current conditions such as SNR, SNIR, mobility and/or radio channel characteristics and/or a scheme used for mapping information to be transmitted to the transmission frequency bandwidth.

**13.** The channel estimation method according to claim 10, 11 or 12, wherein the channel response of a pilot signal in a single pilot transmission unit at a given time-frequency position is interpolated to apply at that frequency for the whole time period of said pilot transmission unit.

**14.** The channel estimation method according to any of claims 10 to 13, wherein the channel response to either side of pilot signals in the frequency direction in a single pilot transmission unit is estimated by interpolation.

**15.** The channel estimation method according to claim 10, 11 or 12, wherein the channel responses of two or more pilot signals transmitted at different times and the same frequency in a single pilot transmission unit are averaged and the average value is assumed to apply at both times.

**16.** The channel estimation method according to claim 15, wherein the channel response to either side of pilot signals in the time direction in said single pilot transmission unit is estimated by interpolation between two or more of the averaged values.

**17.** The channel estimation method according to claim 16, wherein the averaged and interpolated channel response is interpolated in the frequency direction.

**18.** The channel estimation method according to any of claims 10 to 17, wherein two or more of the contemporaneous pilot transmission units are processed consecutively by a single processing module.

**19.** The transmission method according to claim 2 or any claim dependent thereon, wherein said system is an OFDM or OFDMA system and said schemes use different permutation formulae.

**20.** The transmission or channel estimation method according to any preceding claim, wherein said system is an OFDM or OFDMA system, and wherein each slot of an OFDM or OFDMA time-division-duplex frame includes a single pilot transmission unit or is divided equally in the frequency direction into pilot transmission units.

**21.** The transmission or channel estimation method according to any of claims 1 to 19, wherein said system is an OFDM or OFDMA system, and wherein two adjacent slots in a OFDMA time-division-duplex frame include a single pilot transmission unit or are divided equally in the frequency direction into pilot transmission units.

**22.** The transmission or channel estimation method according to any preceding claim, wherein said system is an OFDM or OFDMA system, and wherein a pilot transmission unit is defined in the time direction by two or more adjacent symbols.

**23.** The transmission or channel estimation method according any preceding claim, wherein said system is an OFDM or OFDMA system, and wherein a pilot transmission unit is defined in both the frequency and time directions.

**24.** The transmission or channel estimation method according to any preceding claim, wherein the source apparatus is a base station or relay station or user terminal.

**25.** The transmission or channel estimation method according to any preceding claim, wherein the destination apparatus is a base station or relay station or user terminal.

**26.** A source apparatus of a wireless communication system, the system comprising the source apparatus and a destination apparatus, the source apparatus being operable to transmit information to the destination apparatus and comprising:

allocation means operable to allocate transmission frequency bandwidth over a particular time period into a plurality of contemporaneous pilot transmission units each defined by time and frequency bandwidth wherein only the transmission frequency bandwidth which is to be used for information transmission in the particular time period is allocated into the plurality of pilot transmission units;
assignment means operable to assign pilot signals for transmission at selected time-frequency positions within each of the pilot transmission units; and
transmission means operable, in the particular time period, to transmit information and the pilot signals of at least one of said pilot transmission units from the source apparatus to the destination apparatus.

**27.** A destination apparatus of a wireless communication system, the system comprising: the destination apparatus; a source apparatus operable to transmit information to the destination apparatus; allocation means operable to allocate transmission frequency bandwidth over a particular time period into a plurality of contemporaneous pilot transmission units each defined by time and frequency bandwidth wherein the allocation means is operable to allocate only the transmission frequency bandwidth which is to be used for information transmission in the particular time period into the plurality of pilot transmission units; and assignment means operable to assign pilot signals for transmission at selected time-frequency positions within each of the pilot transmission units, the destination apparatus comprising:

reception means operable, in the particular time period, to receive information and the pilot signals of at least one of said pilot transmission units from the source apparatus wherein every pilot transmission unit received includes both information and the pilot signals;
indication means operable to use each pilot signal received to give an indication of channel response at the transmitted time and frequency; and
processing means operable to process the channel responses for the pilots in the at least one pilot transmission unit to provide an estimate of the channel response over said pilot transmission unit.

**28.** A wireless communication system, the system comprising:

the source apparatus according to claim 26 and the destination apparatus according to claim 27.

**29.** A computer program or suite of computer programs which, when executed on a computing device or computing devices respectively of a wireless communication system, carries out a transmission method used in channel estimation or a channel estimation method according to any of the preceding claims

Figure 1

PRIOR ART

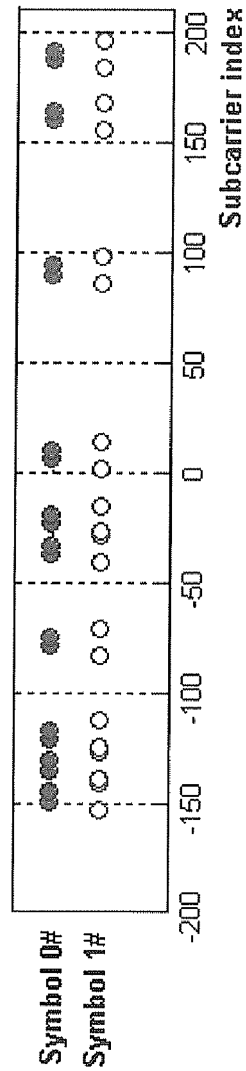

Figure 2

PRIOR ART

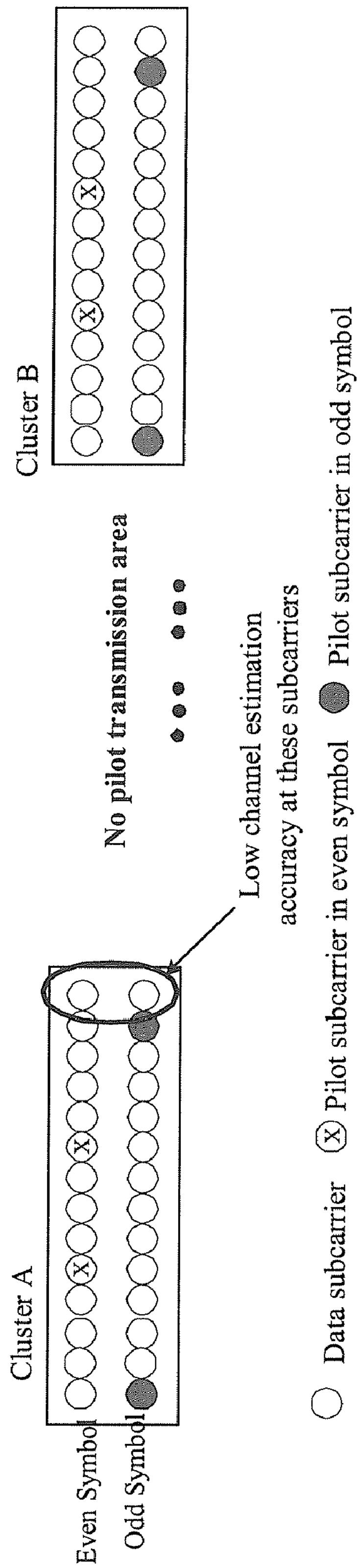

Figure 3

PRIOR ART

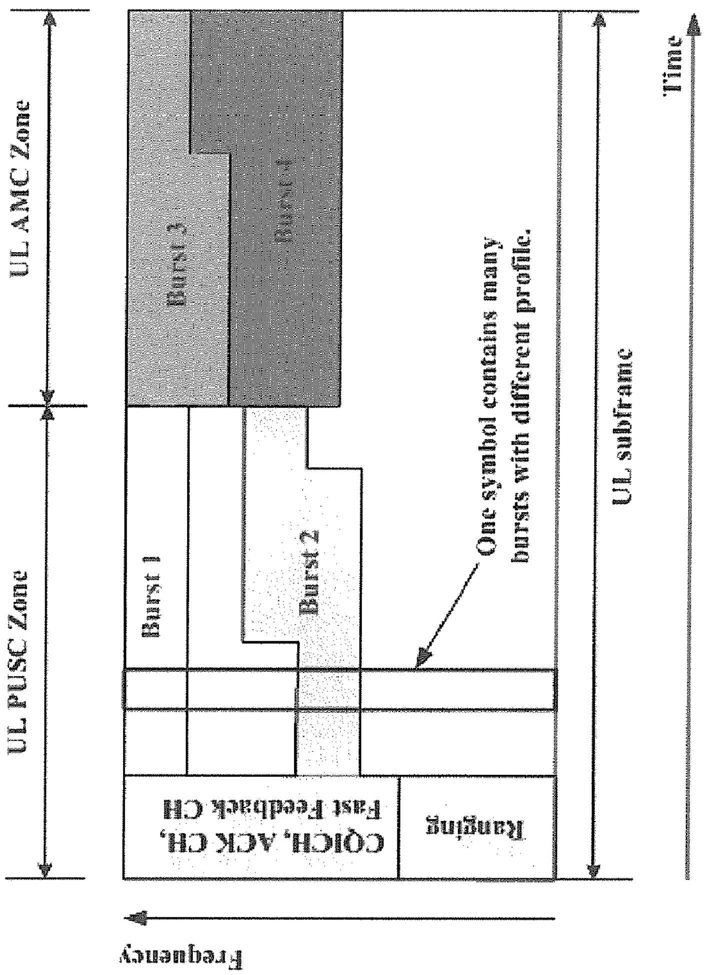

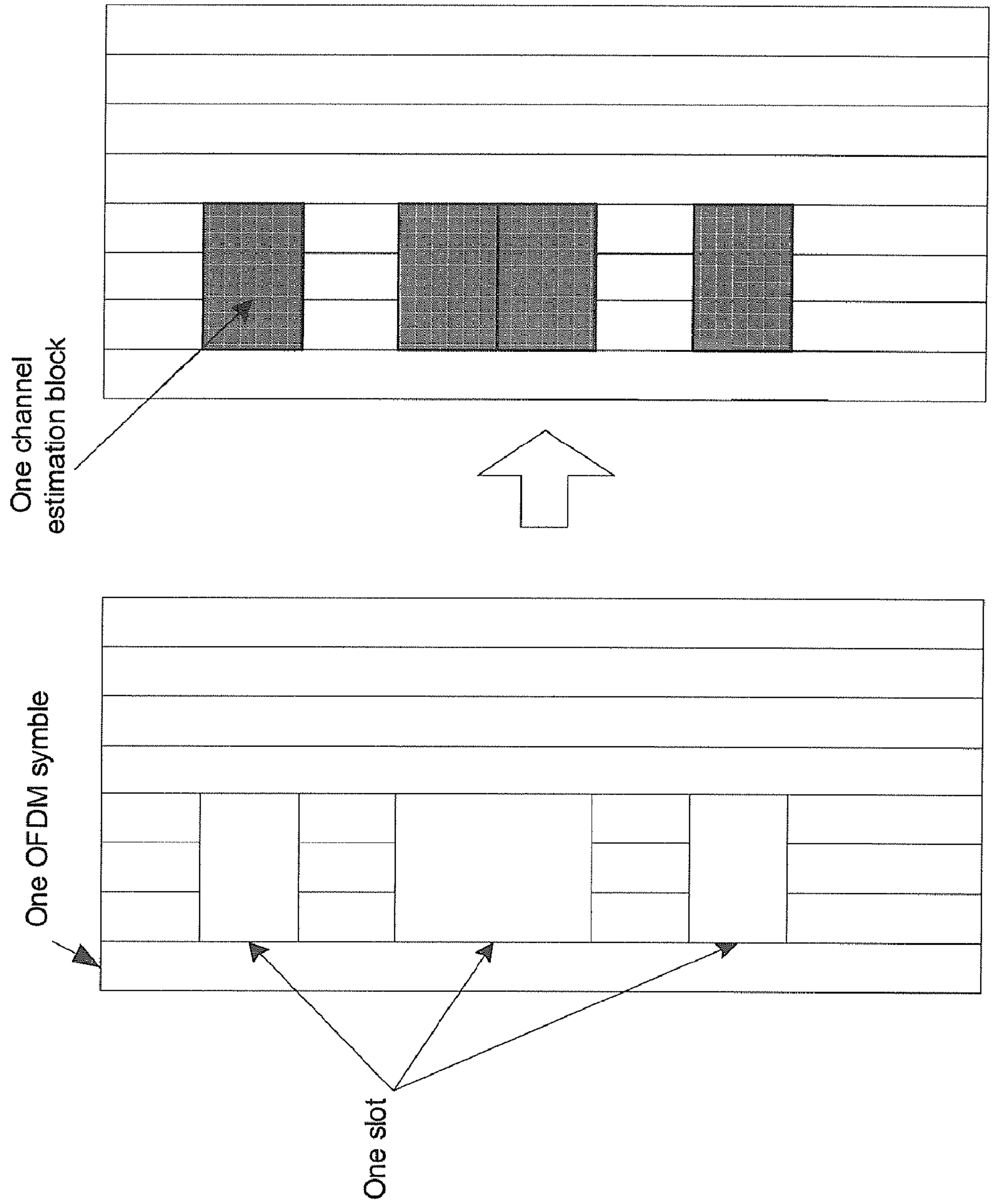


Figure 4a

Figure 4b

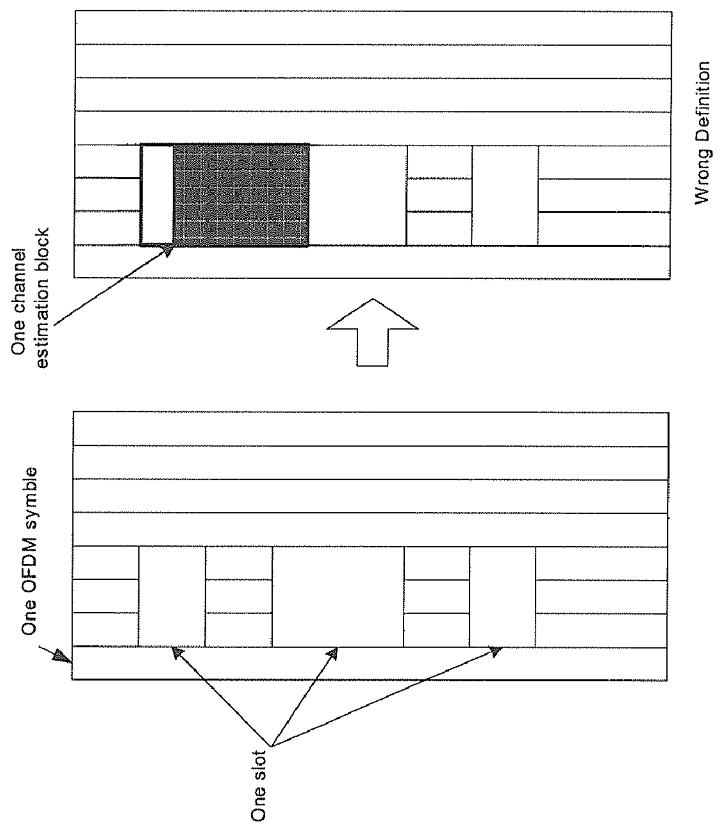
One channel estimation block
Wrong Definition
One OFDM symble
One slot

Figure 4c

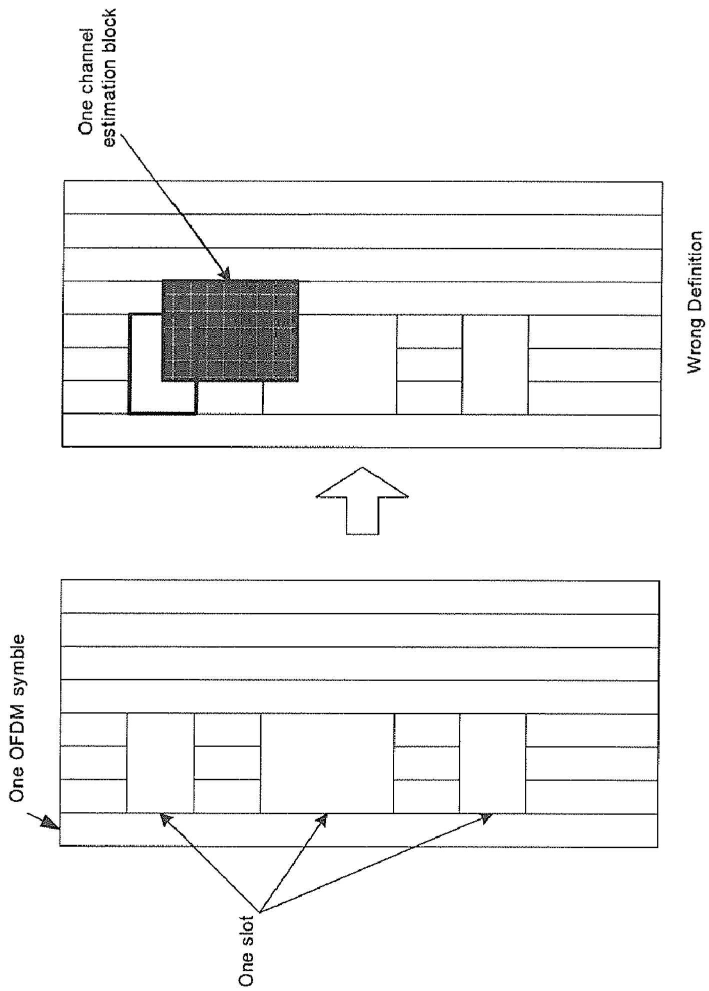
One channel estimation block
Wrong Definition
One OFDM symble
One slot

Figure 4d

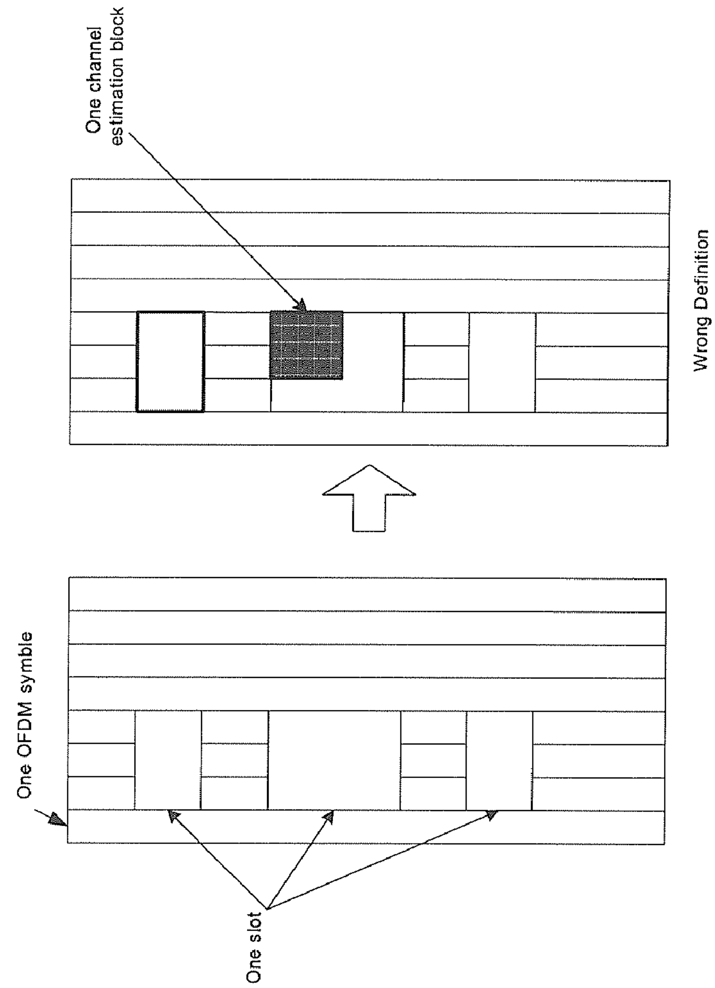
One channel estimation block
Wrong Definition
One OFDM symble
One slot

Figure 4e

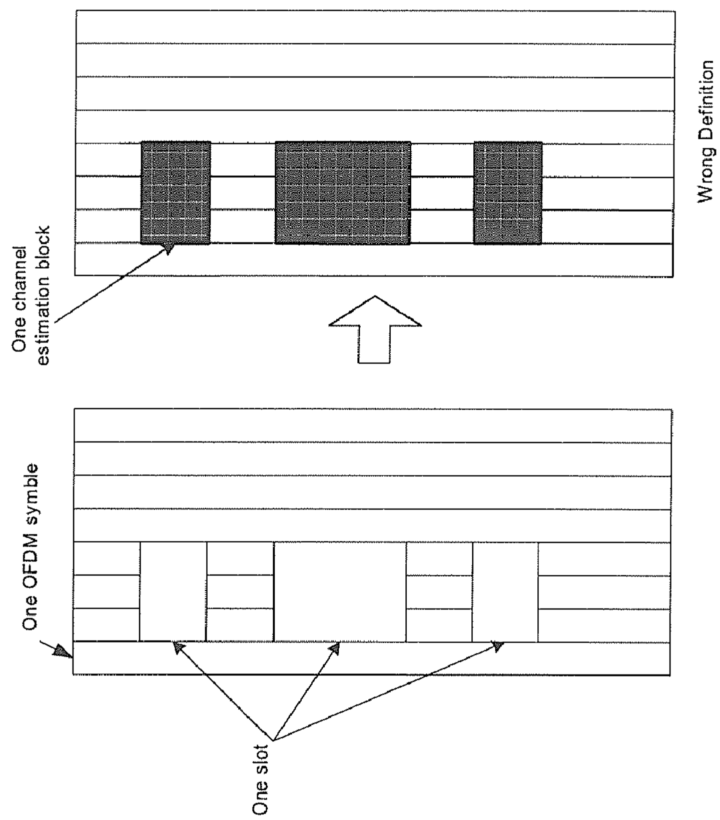
One channel
estimation block
Wrong Definition
One OFDM symble
One slot

Figure 5

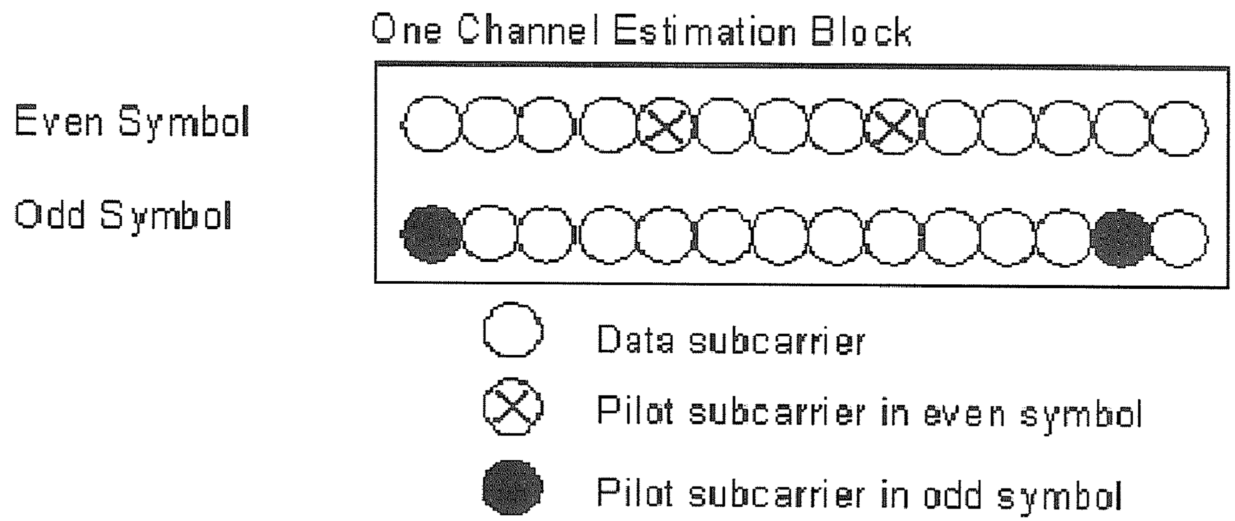
One Channel Estimation Block
Even Symbol
Odd Symbol
Data subcarrier
Pilot subcarrier in even symbol
Pilot subcarrier in odd symbol

Figure 6

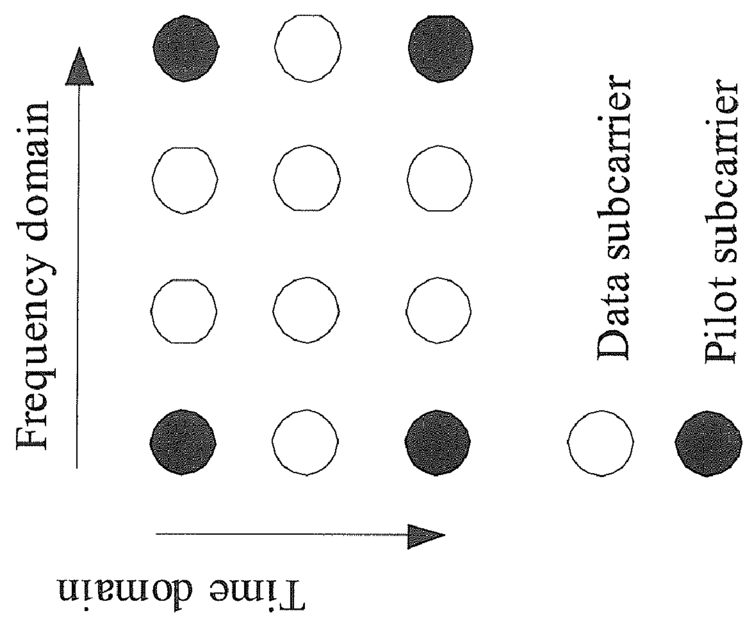
Frequency domain
Time domain
Data subcarrier
Pilot subcarrier

Figure 7

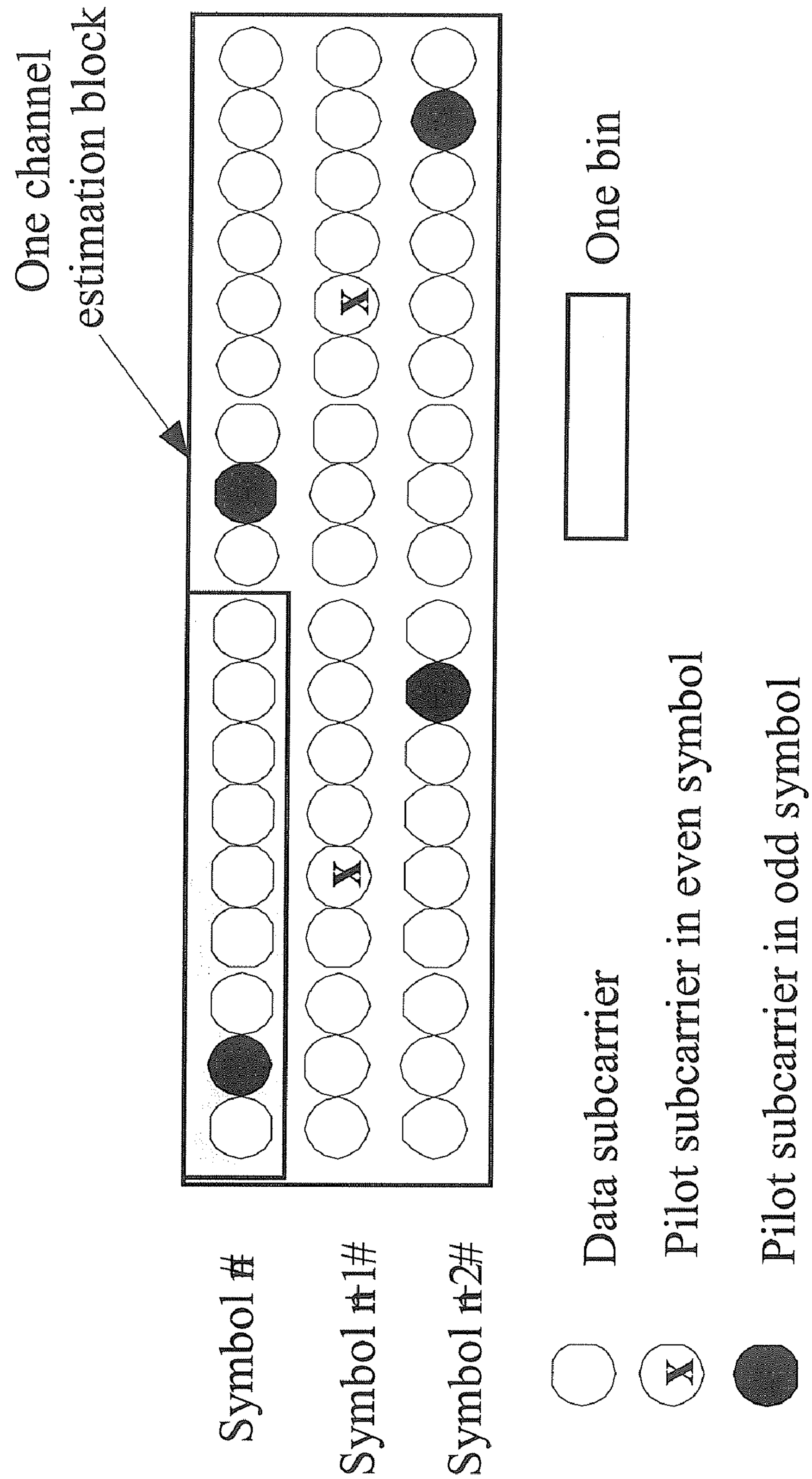
One channel estimation block
One bin
Symbol n#
Symbol n+1#
Symbol n+2#
Data subcarrier
Pilot subcarrier in even symbol
Pilot subcarrier in odd symbol

Figure 8

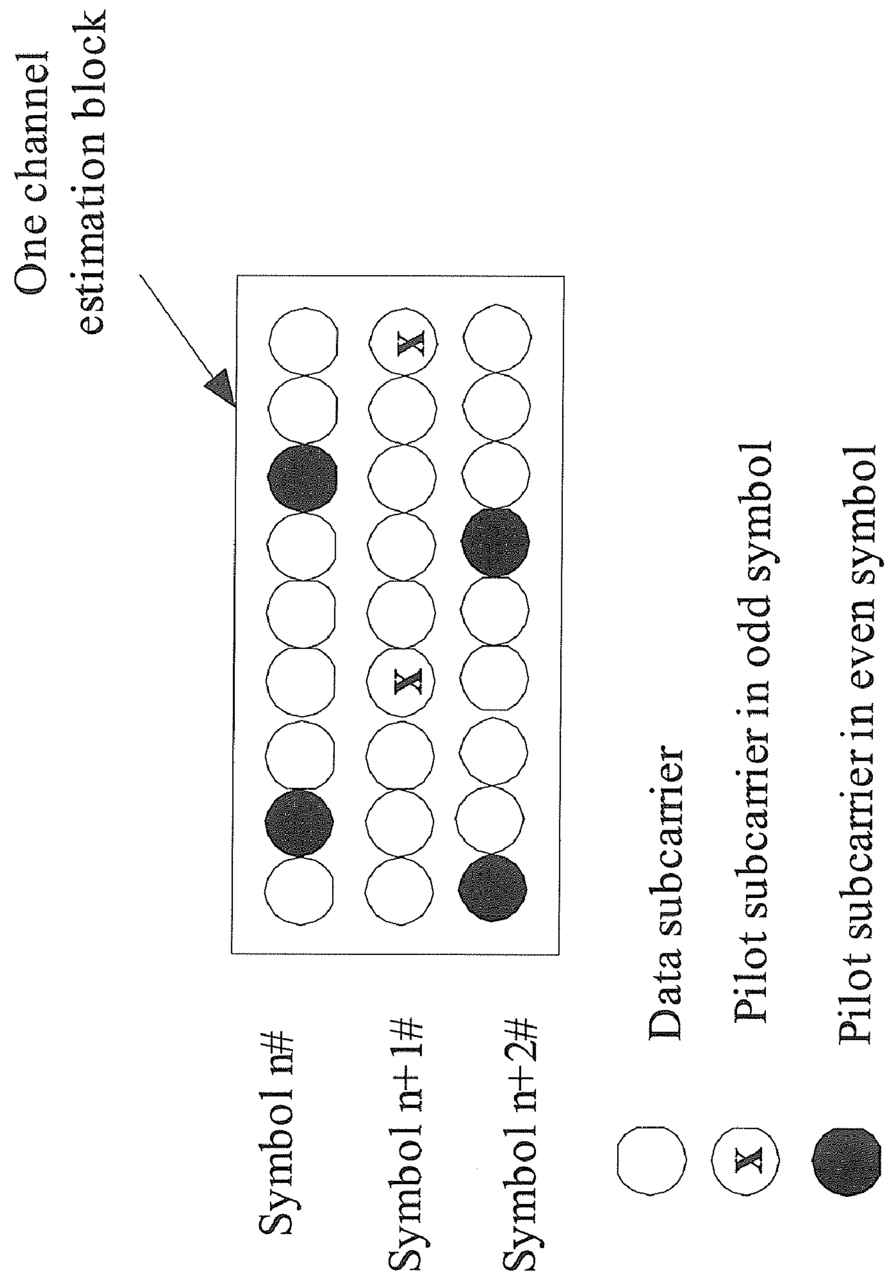
One channel
estimation block
Symbol n#
Symbol n+1#
Symbol n+2#
Data subcarrier
Pilot subcarrier in odd symbol
Pilot subcarrier in even symbol

Figure 9

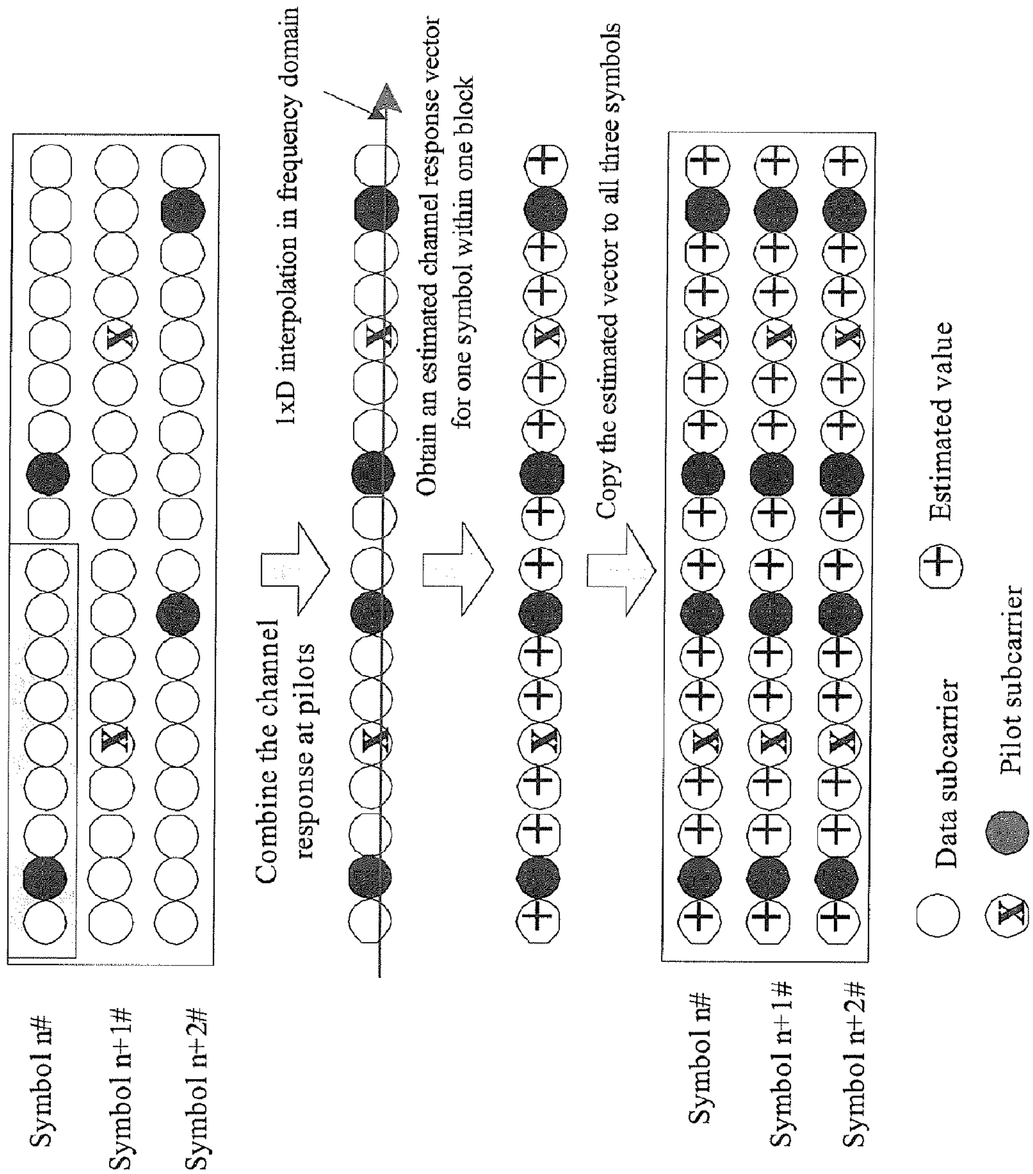
Symbol n#
Symbol n+1#
Symbol n+2#
Combine the channel response at pilots
1xD interpolation in frequency domain
Obtain an estimated channel response vector for one symbol within one block
Copy the estimated vector to all three symbols
Symbol n#
Symbol n+1#
Symbol n+2#
Data subcarrier
Pilot subcarrier
Estimated value

Figure 10

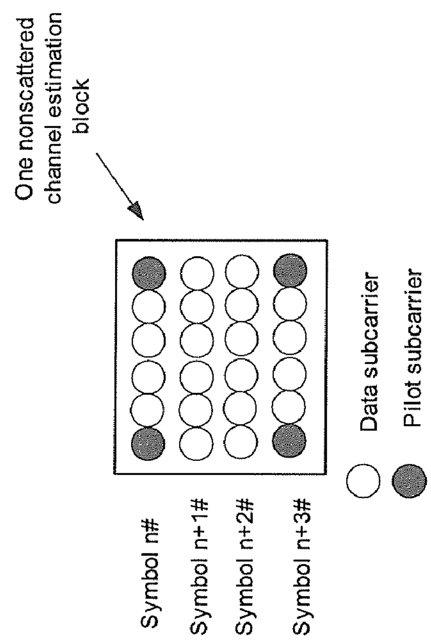
One nonscattered channel estimation block
Symbol n#
Symbol n+1#
Symbol n+2#
Symbol n+3#
Data subcarrier
Pilot subcarrier

Figure 11

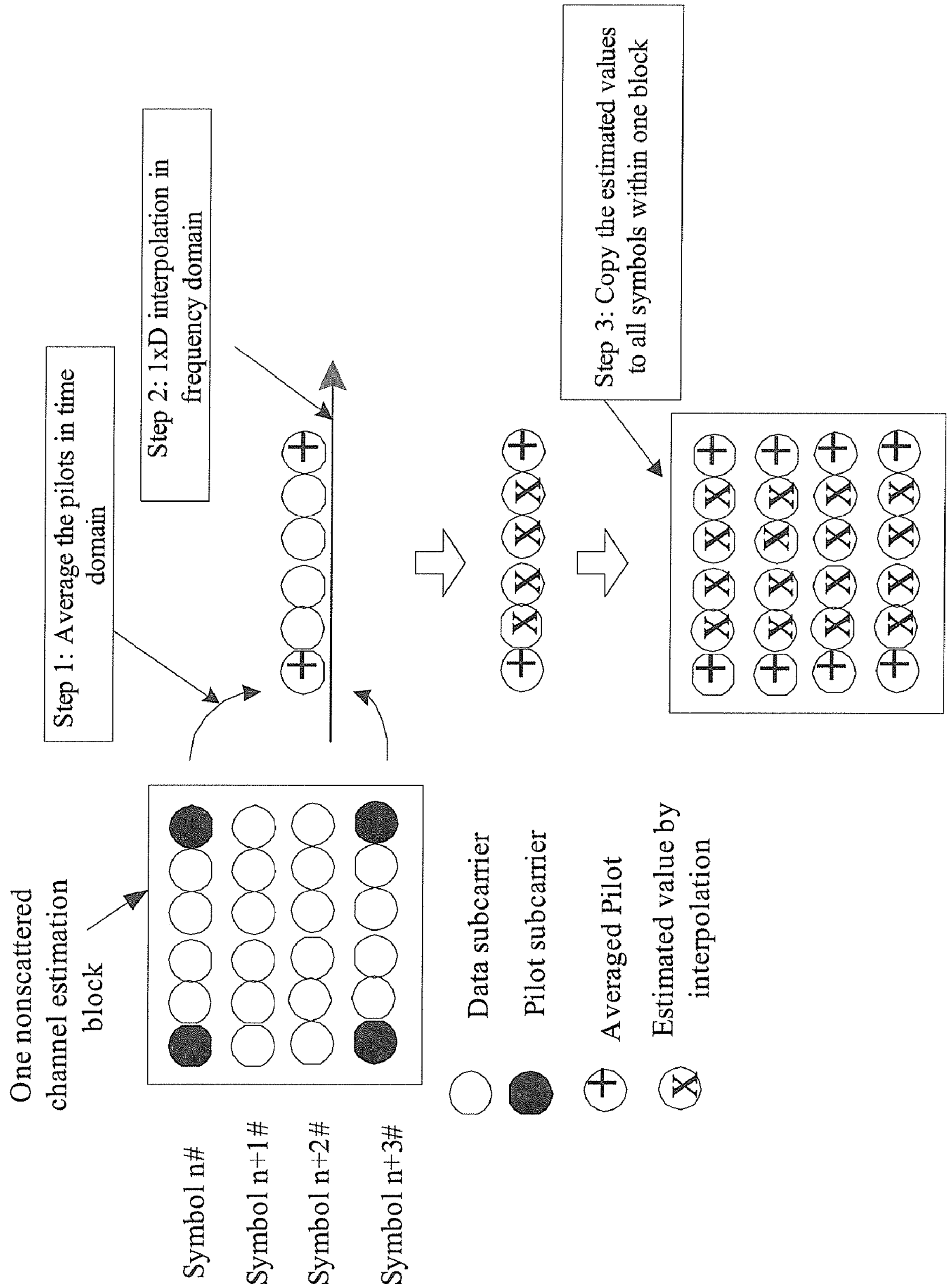
Step 1: Average the pilots in time domain
Step 2: 1xD interpolation in frequency domain
Step 3: Copy the estimated values to all symbols within one block
One nonscattered channel estimation block
Symbol n#
Symbol n+1#
Symbol n+2#
Symbol n+3#
Data subcarrier
Pilot subcarrier
Averaged Pilot
Estimated value by interpolation

European Patent Office

# EUROPEAN SEARCH REPORT

Application Number
EP 06 12 6863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 601 150 A (NTT DOCOMO INC [JP]) 30 November 2005 (2005-11-30)<br>* column 12, line 15 - line 44 *<br>* column 13, line 10 - line 19 *<br>* column 14, line 50 - line 58 *<br>* figures 13-15 *<br>----- | 1-33 | INV.<br>H04L25/02<br>H04L27/26 |
| X | FR 2 829 642 A1 (EADS DEFENCE AND SECURITY NETW [FR]) 14 March 2003 (2003-03-14)<br>* page 4, line 4 - line 14 *<br>* page 9, last paragraph *<br>* page 10, line 11 - line 14 *<br>* page 10, line 30 - page 11, line 20 *<br>* page 13, line 24 - line 27 *<br>* page 15, line 17 - line 27 *<br>* page 19, line 25 - page 20, line 10 *<br>* figures 2a-2c *<br>----- | 1-33 | |
| X | YUANRUN TENG ET AL: "Performance of DCT interpolation-based channel estimation method for MIMO-OFDM systems" COMMUNICATIONS AND INFORMATION TECHNOLOGY, 26 October 2004 (2004-10-26), - 29 October 2004 (2004-10-29) pages 622-627, XP010783269<br>IEEE, PISCATAWAY, NJ, USA<br>ISBN: 0-7803-8593-4<br>* page 622, column 1, last paragraph - column 2, line 8 *<br>* figures 1,2 *<br>----- | 1-14,<br>18-33 | TECHNICAL FIELDS SEARCHED (IPC)<br>H04L |

The present search report has been drawn up for all claims

| Place of search | Date of completion of the search | Examiner |
|---|---|---|
| The Hague | 20 June 2007 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

**ANNEX TO THE EUROPEAN SEARCH REPORT ON EUROPEAN PATENT APPLICATION NO.** EP 06 12 6863

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2007

| Patent document cited in search report | Publication date | Patent family member(s) | Publication date |
|---|---|---|---|
| EP 1601150 A | 30-11-2005 | CN 1703036 A | 30-11-2005 |
| | | JP 2005341056 A | 08-12-2005 |
| | | US 2005265226 A1 | 01-12-2005 |
| FR 2829642 A1 | 14-03-2003 | CA 2460504 A1 | 20-03-2003 |
| | | EP 1425891 A1 | 09-06-2004 |
| | | WO 03024041 A1 | 20-03-2003 |
| | | US 2004240572 A1 | 02-12-2004 |

EPO FORM P0459

For more details about this annex : see Official Journal of the European Patent Office, No. 12/82